# EUROPÄISCHE PATENTSCHRIFT

(11) **EP 1 213 047 B1**
(45) Veröffentlichungstag und Bekanntmachung des Hinweises auf die Patenterteilung: **15.03.2006**
(21) Anmeldenummer: 01811043.7
(22) Anmeldetag: 25.10.2001
(51) Int. Cl.: B01D 59/32, C01B 5/02, B01D 3/20

(54) **Kolonne zum Durchführen eines Isotopenaustausches zwischen einem flüssigen und einem gasförmigen Stoff**
Column for performing an isotope exchange between a liquid and a gas
Colonne d'échange isotopique entre un liquide et un gaz

(30) Priorität: 24.11.2000 EP 00811120
(43) Veröffentlichungstag der Anmeldung: 12.06.2002
(73) Patentinhaber: Sulzer Chemtech AG, 8404 Winterthur (CH)
(72) Erfinder: Engeler, Christian, 8546 Kefikon (CH); Ruckstuhl, Hans, 8405 Winterthur (CH); Zmasek, Richard, 8405 Winterthur (CH)
(74) Vertreter: Sulzer Management AG

(56) Entgegenhaltungen:
- DE-A- 2 939 223

## Beschreibung

Die Erfindung betrifft ein Verfahren sowie eine Kolonne zum Durchführen eines Isotopenaustausches zwischen einem flüssigen und einem gasförmigen Stoff unter Anwendung einer katalytischen Reaktion. Sie bezieht sich auch auf Anwendungen des Verfahrens.

Aus der US-A- 4 143 123 ist ein Verfahren bekannt, mit dem ein Austausch von Wasserstoff-Isotopen durchführbar ist, nämlich zwischen flüssigem Wasser H₂O und Wasserstoffgas H₂, in dem der Wasserstoff H ("Protium") teilweise durch Deuterium D oder Tritium T substituiert ist. Bei diesem Verfahren spielt eine reversible Reaktion eine zentrale Rolle, bei der katalytisch ein Isotop, das in einem Wasserstoffmolekül gebunden ist, mit einem Wasserstoff-Isotop eines Wassermoleküls ausgetauscht wird. Diese Reaktion ist nur dann ausreichend effizient, wenn das katalytisch wirksame Material trocken ist, d.h. von flüssigem Wasser unbenetzt bleibt. Es ist daher ein katalytisch wirksames Material entwickelt worden, das mit einem semipermeablen Film beschichtet ist, der einerseits hydrophob und damit wasserabstossend ist, der aber andererseits für freie Wassermoleküle aus einer Umgebung, die durch Wasserdampf oder ein feuchtes Gas gebildet wird, durchlässig ist.

Aufgabe der Erfindung ist es, ein Verfahren zu schaffen, bei dem sich in einer Kolonne beispielsweise ein Austausch von Wasserstoff-Isotopen zwischen flüssigem Wasser und Wasserstoffgas durchführen lässt und wobei Massnahmen realisiert sind, aufgrund derer eine Kontamination oder Benetzung des Katalysators durch die Flüssigkeit ausbleibt. Ausserdem soll die Kolonne frei von Toträumen sein. Diese Aufgabe wird durch das im Anspruch 1 definierte Verfahren gelöst.

Das Verfahren ist zum Durchführen eines Isotopenaustausches zwischen einem flüssigen Stoff und einem gasförmigen Stoff unter Anwendung einer katalytischen Reaktion vorgesehen. Bei dieser Reaktion findet durch eine heterogene Katalyse der Isotopenaustausch zwischen Molekülen des verdampften flüssigen Stoffs und Molekülen des gasförmigen Stoffs statt. Die Kolonne umfasst eine Mehrzahl von vertikal übereinander angeordneten Modulen, die jeweils in zwei, durch einen Verbindungsbereich seriell verbundene Bereiche K und A unterteilt sind. Im Bereich K ist die katalytische Reaktion auf einer ersten Packung durchführbar. Im Bereich A ist mittels einer zweiten Packung ein Stoffaustausch zwischen einer flüssigen und einer gasförmigen, Dampf enthaltenden Phase zum Ausgleich von Stoffkonzentrationen durchführbar. Beim Betrieb der Kolonne wird ein Transport des gasförmigen, Dampf enthaltenden Stoffs durch die Module aufgrund von Druckgradienten angetrieben. Im Verbindungsbereich wird dabei mindestens einmal die Transportrichtung geändert und zwar aus einer Richtung von oben nach unten in eine Richtung von unten nach oben, während der flüssige Stoff durch die Module von oben nach unten allein aufgrund der Schwerkraft gefördert wird.

Die abhängigen Ansprüche 2 bis 4 betreffen vorteilhafte Ausführungsformen des erfindungsgemässen Verfahrens. Eine Kolonne zum Durchführen des Verfahrens sowie Anwendungen sind Gegenstand der Ansprüche 5 bis 9 bzw. 10 und 11.

Nachfolgend wird die Erfindung anhand der Zeichnungen erläutert. Es zeigen:
- Fig. 1: eine tabellarische Zusammenstellung von abkürzenden Bezeichnungen und ausserdem Beziehungen, die den Isotopenaustausch betreffen,
- Fig. 2: ausschnittsweise einen Längsschnitt durch eine erfindungsgemässe Kolonne,
- Fig. 3: ein Diagramm, in dem Änderungen von Stoffkonzentrationen für einen Modul der Kolonne qualitativ dargestellt sind,
- Fig. 4: eine schematische Darstellung einer Anlage mit einem Kernreaktor und einer Einrichtung zum Abreichern von Tritium aus schwerem Wasser,
- Fig. 5: Beziehungen zu einem weiteren Beispiel für einen Isotopen-Austausch,
- Fig. 6: einen Modul zu einer erfindungsgemässen Kolonne, der einen zentralsymmetrischen Aufbau hat und
- Fig. 7, 8: zwei weitere Varianten zu dem Modul.

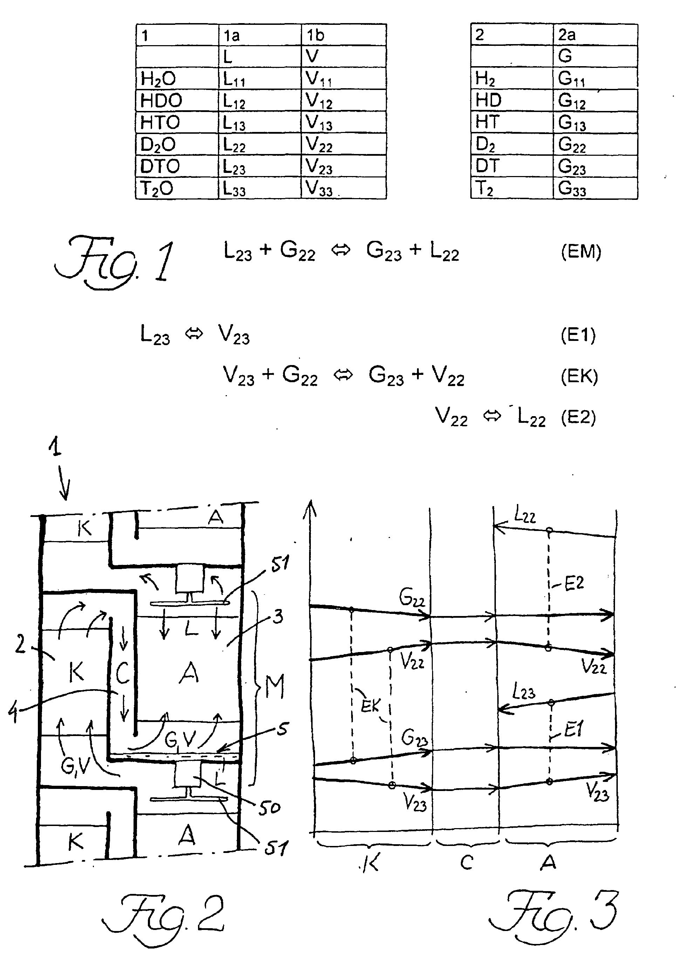

Der Isotopenaustausch, für dessen Durchführung die erfindungsgemässe Kolonne vorgesehen ist, erfolgt zwischen einer Flüssigkeit L und einem Gas G, wobei die Flüssigkeit L für einen katalytischen Teilschritt des Isotopenaustausches als Dampf V vorliegen muss. Die Flüssigkeit L ist beispielsweise schweres Wasser D₂O, in dem ein gewisser Anteil seiner molekularen Komponenten hinsichtlich der Isotopen eine andere Zusammensetzung aufweist: in D₂O (= L₂₂ gemäss den in Fig. 1, Spalten 1 und 1 a tabellarisch zusammengestellten Bezeichnungen) ist ein Deuterium D durch Tritium T ersetzt, so dass DTO (= L₂₃) eine zweite Komponente bildet. Es sind auch andere Beispiele möglich, bei denen L aus einem anderen Gemisch von zwei oder mehr der Komponenten Lᵢⱼ (mit den Indizes i, j = 1, 2 oder 3) besteht, die in der Fig. 1 tabellarisch zusammengestellt sind. Der Dampf D der Flüssigkeit L hat eine entsprechende Zusammensetzung aus Komponenten Dᵢⱼ (i, j = 1, 2, 3), deren Bedeutung aus den Spalten 1 und 1 b in Fig. 1 entnommen werden kann. Das Gas G besteht in analoger Weise aus Komponenten Gᵢⱼ (i, j = 1, 2, 3), deren Bedeutung in den Spalten 2 und 2b aufgeführt ist. Man beachte, dass anhand der Indizes i und j die Zusammensetzung der drei Isotopen H, D und T abgelesen werden kann: es entspricht der Index 1 einem H, der Index 2 einem D und der Index 3 einem T.

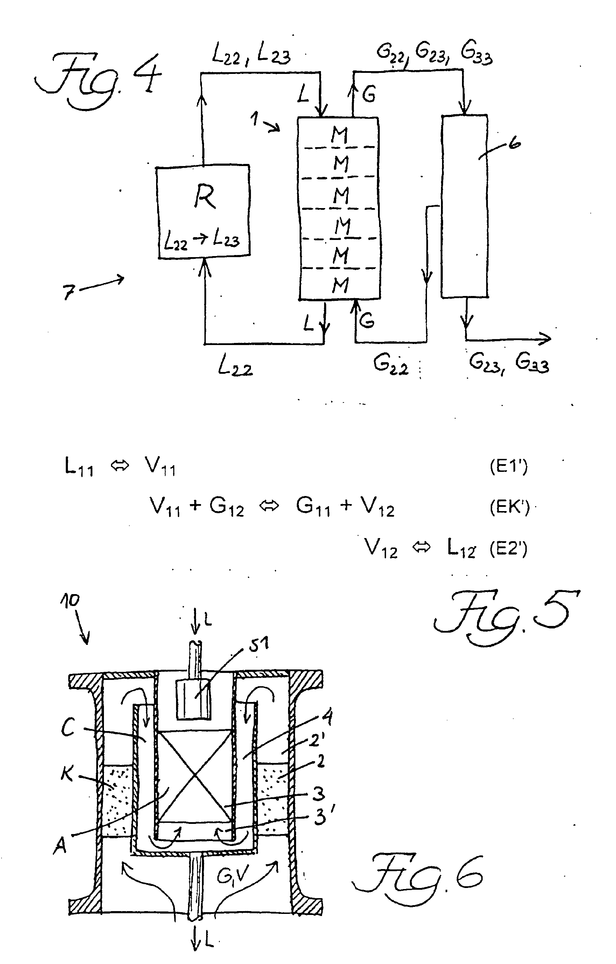

In Fig. 1 sind zusätzlich für ein Beispiel Beziehungen angegeben, mit denen der Isotopenaustausch symbolisch dargestellt ist. Die Beziehung EM betrifft den reversiblen Isotopenaustausch zwischen L₂₃ und G₂₂ in der einen Reaktionsrichtung bzw. L₂₂ und G₂₃ in der umgekehrten Reaktionsrichtung; die Beziehung EM beschreibt also den Austausch von T und D zwischen schwerem Wasser und schwerem Wasserstoff. Dieser Austausch EM, der sich auf einen Modul M einer erfindungsgemässen Kolonne 1 bezieht (vgl. Fig. 2), erfolgt über physikochemische Teilschritte, nämlich Austauschprozesse, die in zwei separaten Bereichen A und K des Moduls M stattfinden und die durch die Beziehungen E1, EK und E2 darstellbar sind. E1 und E2 sind reversible Aggregatszustandsänderungen von Wassermolekülen, nämlich die Verdampfung der Komponente L₂₃ bzw. L₂₂ und die Kondensation der Komponente V₂₂ bzw. V₂₃. Bei diesen Austauschprozessen ergibt sich ein Stoffaustausch zwischen einer flüssigen und einer gasförmigen, Dampf enthaltenden Phase, der zu einem Ausgleich von Stoffkonzentrationen führt. Die Beziehung EK stellt die katalytische Reaktion dar, die im Bereich K des Moduls M stattfindet: Moleküle des Gases G und des Dampfes V werden auf einem katalytisch wirksamen Material adsorbiert und von diesem wieder desorbiert, wobei im adsorbierten Zustand der Isotopenaustausch mit einer gewissen Wahrscheinlichkeit erfolgt.

Die in Fig. 2 ausschnittsweise dargestellte Kolonne 1 umfasst eine Mehrzahl von vertikal übereinander angeordneten Modulen M. Diese sind jeweils in zwei, durch einen Kanal 4 oder Verbindungsbereich C seriell verbundenen Bereiche K und A unterteilt. Im Bereich K findet auf einer Packung 2, die von dem Dampf V enthaltenden Gas G durchströmt wird, die katalytische Reaktion EK statt. Im Bereich A wird mittels einer Packung 3 ein auf den Zustandsänderungen E1 und E2 beruhender Stoffaustausch zwischen der Flüssigkeit L und dem aus G und V bestehenden Gasstrom herbeigeführt. Nach Durchtritt durch die Packung 3 wird die Flüssigkeit L über einen Sammler 5 zu einem Verteiler 51 des benachbarten Moduls weitergeleitet. Der Flüssigkeitssammler 5 enthält einen syphonartigen Ablauf 50, mit dem ein Durchtritt von Gas von unten nach oben unterbunden wird.

Der Transport des aus G und V bestehenden Gasstroms wird durch Druckgradiente angetrieben. Der Gasstrom führt im Bereich K von unten nach oben, im Verbindungsbereich C von oben nach unten und im Bereich A wieder von unten nach oben. Die Flüssigkeit L wird durch die Module M der Kolonne 1 von oben nach unten allein aufgrund der Schwerkraft gefördert.

Als Packung 2 kann eine Schüttung von porösen Körperchen verwendet werden, auf deren Oberflächen ein katalytisch wirksames Material aufgebracht ist. Beispiele für Katalysatoren sind in der bereits genannten US-A- 4 143 123 angegeben. Für den Stoffaustausch im Bereich A kann eine geordnete Packung 3 verwendet werden. Diese ist insbesondere aus vertikalen Lagen aufgebaut, die geneigte, aus gewellten Materialflächen hergestellte Kanäle enthalten und die dabei eine Kreuzkanalstruktur mit sich offen kreuzenden Kanälen bilden. Auch die Packung 2 kann als eine geordnete Packung mit Kreuzkanalstruktur ausgebildet sein, bei der ein Washcoat als Träger des katalytischen Materials verwendet wird. Entsprechend kann die Packung 3 aus einer Schüttung von Füllkörpern ausgebildet sein. Die Packung 3 wird mit Vorteil aus Kupfer hergestellt; denn auf Kupfer lässt sich ein Kupferoxidfilm erzeugen, der gut benetzbar ist.

Die in Fig. 2 schematisch dargestellte Architektur der Kolonne 1 weist folgende Vorteile auf: Es gibt keine schädlichen Toträume; denn alle Raumbereiche werden durchströmt. Die beiden Bereiche A und K sind so gegeneinander abgeschirmt, dass keine Flüssigkeitströpfchen von A auf K übertreten können. Solche Tröpfchen würden einerseits die Effizienz der Katalyse in K beeinträchtigen; andererseits würde mit den Tröpfchen Kupfer transportiert, der den Katalysator kontaminiert und so dessen Reaktivität reduziert.

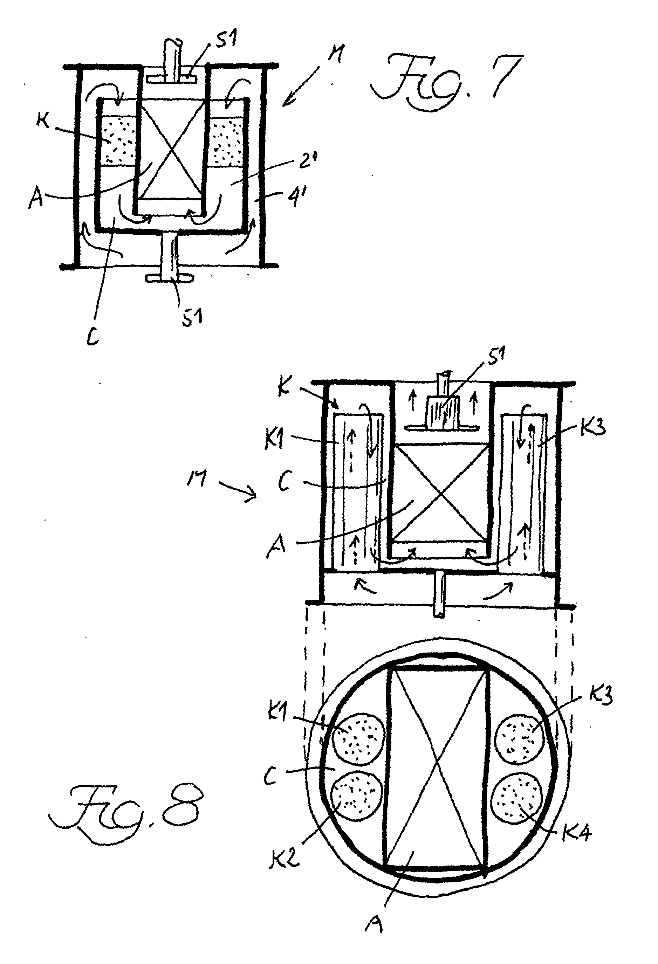

Fig. 3 zeigt anhand eines Diagramms, wie die Konzentrationen der Komponenten Gᵢⱼ, Vᵢⱼ und Lᵢⱼ aufgrund der Austauschprozesse E1, EK und E2 (siehe Fig. 1) in einem Modul M der Kolonne 1 sich ändern. Die Änderungen sind nur qualitativ dargestellt. Mit gestrichelten Verbindungslinien sind die Koppelungen der Konzentrationen aufgrund der Austauschprozesse E1, EK und E2 kenntlich gemacht. Die Kurvenstücke sind als Pfeile dargestellt, um die Bewegungsrichtungen der Komponenten Gᵢⱼ, Vᵢⱼ und Lᵢⱼ durch die Bereiche A, C und K ersichtlich zu machen.

Fig. 4 zeigt eine schematische Darstellung einer Anlage 7 mit einem Kernreaktor R, in dem schweres Wasser (= L mit der Komponente L₂₂) als Moderator und Kühlwasser verwendet wird. Durch Neutroneneinfang wird im schweren Wasser D in T umgewandelt. In der erfindungsgemässen Kolonne 1 wird mittels eines aus D₂ bestehenden Gasstroms (= G mit der Komponente G₂₂) das Tritium aus dem schweren Wasser (= L mit den Komponenten L₂₂ und L₂₃) abgereichert. Der mit Tritium befrachtete Gasstrom (= G mit den Komponenten G₂₂, G₂₃ und G₃₃) wird in einer Tieftemperaturkolonne 6 unter Abtrennung des Tritiums (in Form von G₂₃ und G₃₃) regeneriert.

Die erfindungsgemässe Kolonne kann auch zur Gewinnung von schwerem Wasser verwendet werden. Die Austauschprozesse E1', EK' und E2' sind in Fig. 5 zusammengestellt. Bei diesem Verfahren bildet ein Wasserstoffgas, das D enthält, den gasförmigen Stoff G und ein Gemisch von leichtem und schwerem Wasser den flüssigen Stoff L. Aus G wird Deuterium an L abgegeben; gleichzeitig wird durch G Wasserstoff (d.h. Protium) aus L aufgenommen.

Fig. 6 zeigt einen Modul M zu einer erfindungsgemässen Kolonne, der als ein Schuss 10 ausgebildet ist und der zentralsymmetrisch ausgebildet ist. Die Packung 3 für den Stoffaustausch E1 und E2 befindet sich in einem zylindrischen, den Bereich A bildenden Raum 3'. Der Verbindungsbereich C umfasst einen ersten, konzentrisch zum Bereich A angeordneten Ringraum 4. Der Bereich K mit der Packung 2 ist durch einen zweiten konzentrischen Ringraum 2' gebildet. Die Flüssigkeit L wird durch einen zylindrischen Verteiler 51 auf die Packung 3 verteilt.

Fig. 7 zeigt einen weiteren zentralsymmetrischen Modul, bei dem der Bereich K sich in einem Ringraum 2" befindet, der unmittelbar um den zentralen Bereich A angeordnet ist. Ein äusserer Ringraum 4' bildet einen Verbindungsbereich zwischen benachbarten Modulen M. Im Verbindungsbereich C zwischen den Bereichen A und K, der in diesem Beispiel nicht mehr als ein separater Teilraum ausgebildet ist, wird die Transportrichtung des aus G und V bestehenden Gasstroms nur einmal geändert: Nach einer Strömung durch den Bereich K - von oben nach unten - wechselt die Strömung beim Durchtritt durch den Verbindungsbereich C in die umgekehrte Richtung, die von unten nach oben orientiert ist. Dank dieses Richtungswechsels besteht keine Gefahr, dass Tröpfchen aus dem Bereich A in den Bereich K übertreten.

Die weitere Ausführungsform in Fig. 8 - als Längs- und Querschnitt dargestellt - weist einen Bereich K auf, der durch eine Mehrzahl von parallel angeordneten Teilbereichen K1, K2, K3 und K4 zusammengesetzt ist. Der Raum zwischen diesen Teilbereichen bildet einen Teil des Verbindungsbereichs C. Die Packung 3 des Bereichs A ist in einem quaderförmgigen Raum angeordnet.

## Patentansprüche

1. Verfahren zum Durchführen eines Isotopenaustausches (EM) in einer Kolonne zwischen einem flüssigen Stoff (L) und einem gasförmigen Stoff (G) unter Anwendung einer katalytischen Reaktion (EK), bei der durch eine heterogene Katalyse der Isotopenaustausch zwischen Molekülen des verdampften flüssigen Stoffs (V) und Molekülen des gasförmigen Stoffs (G) stattfindet, wobei die Kolonne eine Mehrzahl von vertikal übereinander angeordneten Modulen (M) umfasst, die jeweils in zwei, durch einen Verbindungsbereich (C) seriell verbundene Bereiche K und A unterteilt sind, und das Verfahren so durchgeführt wird, dass im Bereich K die katalytische Reaktion auf einer ersten Packung (2) abläuft, dass im Bereich A sich mittels einer zweiten Packung (3) ein Stoffaustausch (E1, E2) zwischen einer flüssigen und einer gasförmigen, Dampf enthaltenden Phase ergibt, nämlich zum Ausgleich von Stoffkonzentrationen, dass beim Betrieb der Kolonne ein Transport des gasförmigen, Dampf enthaltenden Stoffs (G, V) durch die Module aufgrund von Druckgradienten angetrieben wird, dass im Verbindungsbereich mindestens einmal die Transportrichtung geändert wird und zwar aus einer Richtung von oben nach unten in eine Richtung von unten nach oben, und dass der flüssige Stoff (L) durch die Module von oben nach unten allein aufgrund der Schwerkraft gefördert wird.

2. Verfahren nach Anspruch 1, **dadurch gekennzeichnet, dass** der Transport des gasförmigen, Dampf enthaltenden Stoffs (G, V) durch die Module (M) jeweils von unten nach oben durch den Bereich K, von oben nach unten durch den Verbindungsbereich (C) und von unten nach oben durch den Bereich A geführt wird.

3. Verfahren nach Anspruch 1 oder 2, **dadurch gekennzeichnet, dass** für die erste Packung (2) eine Schüttung von porösen Körperchen verwendet wird, auf deren Oberflächen ein katalytisch wirksames Material aufgebracht ist.

4. Verfahren nach einem der Ansprüche 1 bis 3, **dadurch gekennzeichnet, dass** für den Stoffaustausch in den Bereichen A jeweils eine geordnete Packung (3) verwendet wird, die insbesondere aus vertikalen Lagen aufgebaut ist, wobei die Lagen geneigte, aus gewellten Materialflächen hergestellte Kanäle enthalten und dabei eine Kreuzkanalstruktur mit sich offen kreuzenden Kanälen bilden.

5. Kolonne zum Durchführen des Verfahrens gemäss einem der Ansprüche 1 bis 4, mit einer Mehrzahl von vertikal übereinander angeordneten Modulen (M), die jeweils in zwei, durch einen Verbindungsbereich (C) seriell verbundene Bereiche K und A unterteilt sind, wobei im Bereich K eine katalytische Reaktion auf einer ersten Packung (2) und im Bereich A ein Stoffaustausch (E1, E2) zwischen einer flüssigen und einer gasförmigen Dampf enthaltenden Phase mittels einer zweiten Packung (3) durchführbar sind.

6. Kolonne nach Anspruch 5, **dadurch gekennzeichnet, dass** unter den Bereichen A jeweils ein Flüssigkeitssammler (5) angeordnet ist, der einen syphonartigen Ablauf (50) enthält, mit dem ein Durchtritt von Gas (G, V) von unten nach oben unterbindbar ist.

7. Kolonne nach Anspruch 5, **dadurch gekennzeichnet, dass** die zweite Packung (3) sich in einem zylindrischen, den Bereich A bildenden Raum (3') befindet, dass der Verbindungsbereich (C) einen ersten, konzentrisch zum Bereich A angeordneten Ringraum (4) umfasst und dass der Bereich K durch einen zweiten konzentrischen Ringraum (2') gebildet ist.

8. Kolonne nach Anspruch 5, **dadurch gekennzeichnet, dass** der Bereich K durch eine Mehrzahl von parallel angeordneten Teilbereichen (K1, K2, K3, K4) zusammengesetzt ist und dass der Raum zwischen diesen Teilbereichen einen Teil des Verbindungsbereichs (C) bildet.

9. Kolonne nach einem der Ansprüche 5 bis 8, **dadurch gekennzeichnet, dass** die zweite Packung (3), die Packung des Bereichs A, aus Kupfer hergestellt ist und dass die Oberfläche des Kupfers aufgrund eines Kupferoxidfilms gut benetzbar ist.

10. Anwendung des Verfahrens gemäss einem der Ansprüche 1 bis 4 zur Abreicherung von Tritium aus schwerem Wasser, wobei Deuterium als gasförmiger Stoff (G) zum Einsatz kommt und das schwere Wasser den flüssigen Stoff (L) bildet, wobei aus diesem Stoff Tritium durch das Deuterium aufgenommen wird und das mit Tritium befrachtete Deuterium in einer Tieftemperaturkolonne (6) unter Abtrennung des Tritiums regeneriert wird.

11. Anwendung des Verfahrens gemäss einem der Ansprüche 1 bis 4 zur Gewinnung von schwerem Wasser, wobei Deuterium enthaltender Wasserstoff den gasförmigen Stoff (G) bildet und aus diesem Stoff Deuterium an schweres Wasser, das den flüssigen Stoff (L) bildet, bei gleichzeitiger Aufnahme von leichtem Wasserstoff (Protium) abgegeben wird.

## Claims

1. A method for carrying out an isotope exchange (EM). in a column between a liquid material (L) and a gaseous material (G) using a catalytic reaction (EK) in which the isotope exchange between molecules of the vaporized liquid material (V) and molecules of the gaseous material (G) takes place through a heterogeneous catalysis, wherein the column comprises a plurality of modules (M) which are arranged vertically one above the other and which are each subdivided into two regions K and A which are serially connected by a connection region (C), and with the method being carried out in such a way that the catalytic reaction takes place in the region K on a first packing (2); that a material exchange (E1, E2) between a liquid and a gaseous phase which contains vapor results in the region A by means of a second packing (3), namely for compensating material concentrations; that during the operation of the column a transport of the gaseous material (G, V) which contains vapor is driven through the modules as a result of pressure gradients; that the transport direction is changed at least once in the connection region, and indeed from a downward direction to an upward direction, and that the liquid material (L) is forwarded downwardly through the modules through the action of gravity alone.

2. A method in accordance with claim 1, **characterized in that** the transport of the gaseous material (G, V) which contains vapor through the modules (M) is in each case conducted upwardly through the region K, downwardly through the connection region (C) and upwardly through the region A.

3. A method in accordance with claim 1 or claim 2, **characterized in that** a filling of porous particles, on the surface of which a catalytically active material is applied, is used for the first packing (2).

4. A method in accordance with any one of the claims 1 to 3, **characterized in that** an ordered packing (3) which is in particular built up of vertical layers, with the layers containing inclined channels which are produced from corrugated material surfaces and thereby form a crossed channel structure with openly crossing channels, is in each case used for the material exchange in the regions A.

5. A column for carrying out the method in accordance with any one of the claims 1 to 4 having a plurality of modules (M) arranged vertically above one another which are each subdivided into two regions K and A serially connected by a connection region (C), wherein a catalytic reaction can be carried out in the region K on a first packing (2) and a substance exchange (E1, E2) between a liquid phase and a gaseous phase containing vapor can be carried out by means of a second packing (3).

6. A method in accordance with claim 5, **characterized in that** a liquid collector (5) which contains a siphon-like drain (50) by means of which an upward passing through of gas (G, V) can be prevented is arranged beneath each of the regions A.

7. A method in accordance with claim 5, **characterized in that** the second packing (3) is located in a cylindrical space (3') which forms the region A; **in that** the connection region (C) comprises a first ring space (4) which is arranged concentrically to the region A; and **in that** the region K is formed by a second concentric ring space (2').

8. A method in accordance with claim 5, **characterized in that** the region K is composed of a plurality of partial regions (K1, K2, K3, K4) which are arranged in parallel; and **in that** the space between these partial regions forms a part of the connection region (C).

9. A method in accordance with any one of the claims 5 to 8, **characterized in that** the second packing (3), the packing of the region A, is manufactured of copper; and **in that** the surface of the copper can be easily wetted as a result of a copper oxide film.

10. Use of the method in accordance with any one of the claims 1 to 4 for the de-enrichment of tritium from heavy water, with deuterium being used as the gaseous material (G) and the heavy water forming the liquid material (L), with tritium being taken up from this material by the deuterium and with the deuterium which is charged with the tritium being regenerated in a low temperature column (6), with tritium being separated off.

11. Use of the method in accordance with any one of the claims 1 to 4 for the winning of heavy water, with hydrogen which contains deuterium forming the gaseous material (G) and with deuterium being given off from this material to heavy water, which forms the liquid material (L), with light hydrogen (protium) simultaneously being taken up.

## Revendications

1. Procédé pour réaliser un échange isotopique (EM) dans une colonne entre une substance liquide (L) et une substance gazeuse (G) par emploi d'une réaction catalytique (EK), dans laquelle l'échange d'isotope se produit par une catalyse hétérogène, entre des molécules de la substance liquide vaporisée (V) et les molécules de la substance gazeuse (G), où la colonne comprend un certain nombre de modules (M) disposés verticalement l'un au-dessus de l'autre, qui sont chaque fois divisés en deux zones K et A, reliées en série par une zone de liaison (C) et le procédé est réalisé de sorte que dans la zone K, la réaction catalytique se développe sur un premier garnissage (2), que dans la zone A, on peut réaliser à l'aide d'un deuxième garnissage (3), un échange de substance (E1, E2) entre une phase liquide et une phase gazeuse, contenant la vapeur, à l'équilibre des concentrations en substance, de sorte que lors du fonctionnement de la colonne, un transport de la substance gazeuse, contenant la vapeur (G, V), est réalisé par le module sur base des gradients de pression, que dans la zone de liaison, la direction du transport est modifiée au moins une fois, et cela depuis une direction de haut en bas vers une direction de bas en haut, et que la substance liquide (L) est accélérée par le module, de haut en bas, seulement sur base de la force de gravité.

2. Procédé selon la revendication 1, **caractérisé en ce que** le transport de la substance gazeuse, contenant la vapeur (G, V) est réalisé dans le module (M), chaque fois de bas en haut dans la zone K, de haut en bas dans la zone de liaison (C) et de bas en haut dans la zone A.

3. Procédé selon la revendication 1 ou 2, **caractérisé en ce que** pour le premier garnissage (2), on utilise un entassement de corpuscules poreux, sur la surface desquels est appliqué un matériau catalytiquement actif.

4. Procédé selon l'une quelconque des revendications 1 à 3, **caractérisé en ce que** pour l'échange de substance dans les zones A, on utilise chaque fois, un garnissage (3) ordonné, qui est élaboré en particulier en couches verticales, où les couches contiennent des canaux inclinés, préparés à partir de surfaces ondulées de matériau et qui forment ainsi, une structure en canaux croisés, avec des canaux croisant s'y ouvrant.

5. Colonne pour réaliser un procédé selon l'une des revendications 1 à 4, avec un certain nombre de modules (M) disposés verticalement les uns sur les autres, qui sont chaque fois divisés en deux zones K et A, reliées en série par un canal 4 ou une zone de liaison (C), où dans la zone K, se produit sur un garnissage (2), une réaction catalytique et dans la zone A, à l'aide d'un deuxième garnissage (3), est provoqué un échange de substances (E1, E2), entre une phase liquide et une phase gazeuse contenant la vapeur.

6. Colonne selon la revendication 5, **caractérisée en ce que** sous la zone A, est chaque fois disposée un accumulateur de liquide (5), qui contient une structure de type siphon (50), par laquelle un passage du gaz (G, V) de bas en haut peut être interrompu.

7. Colonne selon la revendication 5, **caractérisée en ce que** le deuxième garnissage (3) se trouve dans une chambre cylindrique (3'), formant la zone A, **en ce que** la zone de liaison (C) se compose d'une première chambre annulaire (4), disposée de manière concentrique autour de la zone A et que la zone K est formée par une deuxième chambre annulaire (2'), concentrique.

8. Colonne selon la revendication 5, **caractérisée en ce que** la zone K est composée d'un certain nombre de zones partielles parallèles (K1, K2, K3, K4) et que l'espace entre ces zones partielles forme une partie de la zone de liaison (C).

9. Colonne selon l'une quelconque des revendications 5 à 8, **caractérisée en ce que** le deuxième garnissage (3), le garnissage de la zone A, est préparé à partie de cuivre et **en ce que** la surface du cuivre est bien humectable à cause d'un film d'oxyde de cuivre.

10. Utilisation du procédé selon l'une quelconque des revendications 1 à 4, pour l'enrichissement en tritium à partir d'eau lourde, où le deutérium est mis en oeuvre comme substance gazeuse (G) et l'eau lourde forme la substance liquide (L), où à partir de cette substance, le tritium est fixé par le deutérium et le deutérium chargé de tritium est régénéré dans une colonne à basse température (6) avec séparation du tritium.

11. Utilisation du procédé selon l'une quelconque des revendications 1 à 4, pour l'obtention d'eau lourde, où de l'hydrogène contenant du deutérium forme la substance gazeuse (G) et à partir de cette substance, le deutérium est cédé à l'eau lourde, qui forme la substance liquide (L), avec fixation simultanée d'hydrogène léger (protium).
